# EUROPÄISCHE PATENTSCHRIFT

(11) **EP 3 544 844 B1**
(45) Veröffentlichungstag und Bekanntmachung des Hinweises auf die Patenterteilung: **17.02.2021**
(21) Anmeldenummer: 17800518.7
(22) Anmeldetag: 16.11.2017
(51) Int. Cl.: H02J 7/00, B60L 7/10, H01M 10/44, H02J 7/14, H02J 1/00

(54) **BETRIEBSVERFAHREN FÜR EINE ZWEISPANNUNGSBATTERIE**
OPERATING METHOD FOR A DUAL-VOLTAGE BATTERY
PROCÉDÉ PERMETTANT DE FAIRE FONCTIONNER UNE BATTERIE BI-TENSION

(30) Priorität: 22.11.2016 DE 102016122453
(43) Veröffentlichungstag der Anmeldung: 02.10.2019
(73) Patentinhaber: HELLA GmbH & Co. KGaA, 59552 Lippstadt (DE)
(72) Erfinder: KÖRNER, André, 59557 Lippstadt (DE); KAHNT, Sebastian, 91058 Erlangen (DE); LIEBSCHER, Hans Joachim, 97080 Würzburg (DE)
(86) Internationale Anmeldenummer: PCT/EP2017/079451
(87) Internationale Veröffentlichungsnummer: WO 2018/095801

(56) Entgegenhaltungen:
- DE-A1- 10 055 531
- DE-A1- 10 055 531
- DE-A1-102005 051 003
- DE-A1-102013 113 182
- DE-A1-102013 113 182
- DE-A1-102015 104 293
- DE-A1-102015 104 293
- DE-B- 1 120 495
- US-A1- 2011 001 442
- US-A1- 2011 001 442
- US-A1- 2012 013 180
- US-A1- 2014 285 003
- US-A1- 2014 285 003

## Beschreibung

Die Erfindung betrifft ein Betriebsverfahren für eine Zweispannungsbatterie eines Fahrzeugs gemäß Anspruch 1.

Eine zur Durchführung des gattungsgemäßen Betriebsverfahrens ausgebildete Zweispannungsbatterie ist aus der DE 10 2013 113 182 A1 bekannt. Es ist hierbei vorgesehen, eine erste Gruppe von Batteriezellenblöcken und eine zweite Gruppe von Batteriezellblöcken parallel anzuordnen. Es können dann eine erste Spannung oder eine größere zweite Spannung bereitgestellt werden, indem die Batteriezellblöcke gruppenintern in einer ersten Verbindungsanordnung parallel verschaltet sind und in der zweiten Verbindungsanordnung seriell verbunden werden. Zur Realisierung der Umschaltung sind den Batteriezellblöcken Leistungsschaltelemente zugeordnet. Diese können zum Beispiel bidirektionale Halbleiterschalter oder Relais sein.

Aufgabe der vorliegenden Erfindung ist es, ein verbessertes Betriebsverfahren für eine Zweispannungsbatterie anzugeben, welches eine verbesserte Nutzung einer Speicherkapazität der Zweispannungsbatterie erlaubt.

Zur Lösung der Aufgabe ist das erfindungsgemäße Betriebsverfahren in Verbindung mit dem Oberbegriff des Patentanspruchs 1 dadurch gekennzeichnet, dass in der zweiten Verbindungsanordnung, in der
- durch Schließen der Serienverbindungsschalter aller Batteriezellblöcke der Gruppe von Batteriezellblöcken und
- durch Öffnen der Parallelverbindungsschalter der weiteren Batterieblöcke die Batteriezellblöcke der Gruppe von Batteriezellblöcken
die Batteriezellblöcke der Gruppe von Batteriezellblöcken seriell verschaltet sind, und der Parallelverbindungsschalter des ersten Batteriezellblocks in Abhängigkeit von einem Betriebszustand des Fahrzeugs in eine Schließstellung oder in eine Öffnungsstellung gebracht wird, wobei in der Schließstellung des Parallelverbindungsschalter des ersten Batteriezellblocks der erste Batteriezellblock der Gruppe von Batteriezellblöcken zu dem wenigstens einen dritten Batteriezellblock parallel verschaltbar ist.

Der besondere Vorteil der Erfindung besteht darin, dass jedenfalls der erste Batteriezellblock der Gruppe von Batteriezellblöcken in der zweiten Verbindungsanordnung die Kapazität der zur Bereitstellung der ersten Spannung vorgesehenen dritten Batteriezellblöcke erweitern und die Energieversorgung bei der ersten Spannung stabilisieren kann. Der erste Batteriezellblock wird hierzu durch das Schließen des Parallelverbindungsschalters zu den dritten Batteriezellblöcken parallel verschaltet und befindet sich gleichzeitig in einer seriellen Verschaltung mit den weiteren Batteriezellblöcken der Gruppe von Batteriezellblöcken. Neben der Verbesserung der Kapazität wird zudem der Stromdurchsatz durch die die erste Spannung bereitstellende Batteriezellblöcke reduziert und der elektrische Gesamtwiderstand der Serienanordnung herabgesetzt. Es verbessert sich insofern ein Potenzial für die Energierückgewinnung, da eine Stromaufnahmefähigkeit bei der zweiten Spannung verbessert wird. Ebenfalls reduziert sich bei der Energierückgewinnung der Stromdurchsatz durch den ersten Batteriezellblock, da ein Rückgewinnungsstrom anteilig und unmittelbar über den wenigstens einen dritten Batteriezellblock fließt. Insgesamt erhöht sich hierdurch die Lebensdauer der Batteriezellblöcke.

Nach einer bevorzugten Ausführungsform der Erfindung erfolgt die Verbringung des Parallelverbindungsschalters des ersten Batteriezellblocks in die Schließstellung und/oder in die Öffnungsstellung abhängig von einem Fahrzustand des Fahrzeugs und/oder einem Batteriezustand und/oder einem Lastzustand. Der Fahrzustand, der Batteriezustand und/oder der Lastzustand sind insofern Betriebszustände im Sinne der Erfindung beziehungsweise des Patentanspruchs 1. Ein fahrzustandsabhängiges Schließen oder Öffnen des Parallelverbindungsschalters erfolgt beispielsweise beim Beschleunigen, Halten, Parken, aktiven Segeln oder im Zustand der Energierückgewinnung. Ein aktives Segeln liegt hierbei vor, wenn bei einem Hybridfahrzeug während der Fahrt ein Verbrennungsmotor ausgeschaltet wird und die Fahrzeuggeschwindigkeit mittels eines elektrischen Antriebs konstant gehalten wird. Im Zustand der Energierückgewinnung wird insbesondere Bremsenergie des Fahrzeugs über einen Generator in elektrische Energie gewandelt und in die Zweispannungsbatterie eingespeist. Zu unterscheiden ist hierbei eine Energierückgewinnung in einem moderaten Maß - diese liegt vor, wenn der bei der Energierückgewinnung entstehende Strom weder die erste noch die zweite Spannung kritisch erhöht - sowie eine starke Energierückgewinnung. Sie liegt vor, wenn der bei der Energierückgewinnung entstehende Strom zu einer kritischen Erhöhung der ersten Spannung führen kann.

Nach einer Weiterbildung der Erfindung wird an einem ersten Anschlusspunkt der Zweispannungsbatterie, an dem die erste Spannung anliegt, eine Strom- und/oder Spannungsmessung durchgeführt. Der Parallelverbindungsschalter wird in der zweiten Verbindungsanordnung geschlossen, wenn ein bei der ersten Spannung bereitgestellter Strom kleiner ist als ein erster unterer Grenzstrom oder größer ist als ein erster oberer Grenzstrom oder wenn die erste Spannung kleiner ist als ein erster Minimalspannungswert oder wenn ein bei der ersten Spannung betriebener elektrischer Verbraucher einen erhöhten Bedarf für den Strom voranmeldet. Vorteilhaft gelingt es hierdurch, den ersten Batteriezellblock sowohl zur Bereitstellung der zweiten Spannung vorzusehen als auch durch die Parallelschaltung desselben mit dem wenigstens einen dritten Batteriezellblock die Versorgung bei der ersten Spannung zu stützen beziehungsweise zu stabilisieren. Insbesondere in Situationen, in denen elektrische Verbraucher, welche an der ersten Spannung betrieben werden, einen erhöhten Energiebedarf haben, kann so einem kritischen Betriebszustand vorgebeugt werden.

Nach einer Weiterbildung der Erfindung werden der erste Strom und die erste Spannung an dem ersten Anschlusspunkt gemessen und in der zweiten Verbindungsanordnung der Parallelverbindungsschalter geöffnet, wenn der bei der ersten Spannung bereitgestellte Strom größer ist als der erste untere Grenzstrom und kleiner ist als der erste obere Grenzstrom und wenn die erste Spannung größer ist als der erste Minimalspannungsgrenzwert und wenn kein bei der ersten Spannung betriebener elektrischer Verbraucher einen erhöhten Strombedarf anmeldet. Vorteilhaft wird hierdurch bedarfsgerecht und in Abhängigkeit vom Batteriezustand beziehungsweise vom Lastzustand beziehungsweise vom Betriebszustand des Fahrzeugs eine weitere Stabilisierung der elektrischen Energieversorgung erreicht.

Nach einer Weiterbildung der Erfindung werden an einem der zweiten Spannung zugeordneten zweiten Anschlusspunkt der Zweispannungsbatterie der Strom und die Spannung gemessen. In der zweiten Verbindungsanordnung wird der Parallelverbindungsschalter geschlossen, wenn ein bei der zweiten Spannung bereitgestellter Strom kleiner ist als ein zweiter oberer Grenzstrom und größer ist als ein zweiter unterer Grenzstrom und wenn die zweite Spannung kleiner ist als ein zweiter Maximalspannungsgrenzwert und größer ist als ein zweiter Minimalspannungsgrenzwert und wenn kein bei der zweiten Spannung betriebener elektrischer Verbraucher einen erhöhten Bedarf für den Strom voranmeldet. Vorteilhaft kann in der vorliegenden Weise insbesondere eine Versorgung der elektrischen Verbraucher bei der zweiten Spannung zuverlässig erfolgen. Insofern ist der Parallelverbindungsschalter dann geschlossen, wenn zuvor definierte Grenzwerte für den Lade- beziehungsweise Entladestrom der Zweispannungsbatterie nicht überschritten werden beziehungsweise keine unzulässig großen beziehungsweise kleinen Spannungen detektiert werden.

Nach einer Weiterbildung der Erfindung wird der Parallelverbindungsschalter in der zweiten Verbindungsanordnung geöffnet, wenn der bei der zweiten Spannung bereitgestellte Strom größer ist als der zweiter oberer Grenzstrom oder wenn der bei der zweiten Spannung bereitgestellte Strom kleiner ist als der zweite untere Grenzstrom oder wenn die zweite Spannung größer ist als ein zweiter Maximalspannungsgrenzwert oder wenn die zweite Spannung kleiner ist als ein zweiter Minimalspannungsgrenzwert oder wenn ein bei der zweiten Spannung betriebener elektrischer Verbraucher einen erhöhten Bedarf für den Strom voranmeldet. Vorteilhaft wird durch den Algorithmus zum Öffnen des Parallelverbindungsschalters sichergestellt, dass bei einer starken aktuellen oder bevorstehenden Belastung der Zweispannungsbatterie an der zweiten Spannung die Auswirkungen für die bei der ersten Spannung betriebenen elektrischen Verbraucher reduziert wird, indem die Parallelanordnung des ersten Batteriezellblocks aufgehoben wird. Die zweite Spannung wird dann durch den ersten Batteriezellblock und den wenigstens einen weiteren Batteriezellblock bereitgestellt, während die erste Spannung über den wenigstens einen dritten Batteriezellblock bereitgestellt wird. Wechselwirkungen in der Energieversorgung wird insofern entgegengewirkt.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigen:
- Fig. 1: ein Prinzipschaltbild einer erfindungsgemäßen Zweispannungsbatterie für ein Fahrzeug,
- Fig. 2: ein erstes Zustandsdiagramm für die Zweispannungsbatterie nach Fig. 1,
- Fig. 3: ein zweites Zustandsdiagramm für die Zweispannungsbatterie nach Fig. 1,
- Fig. 4: ein drittes Zustandsdiagramm für die Zweispannungsbatterie nach Fig. 1 und
- Fig. 5: ein viertes Zustandsdiagramm für die Zweispannungsbatterie nach Fig. 1.

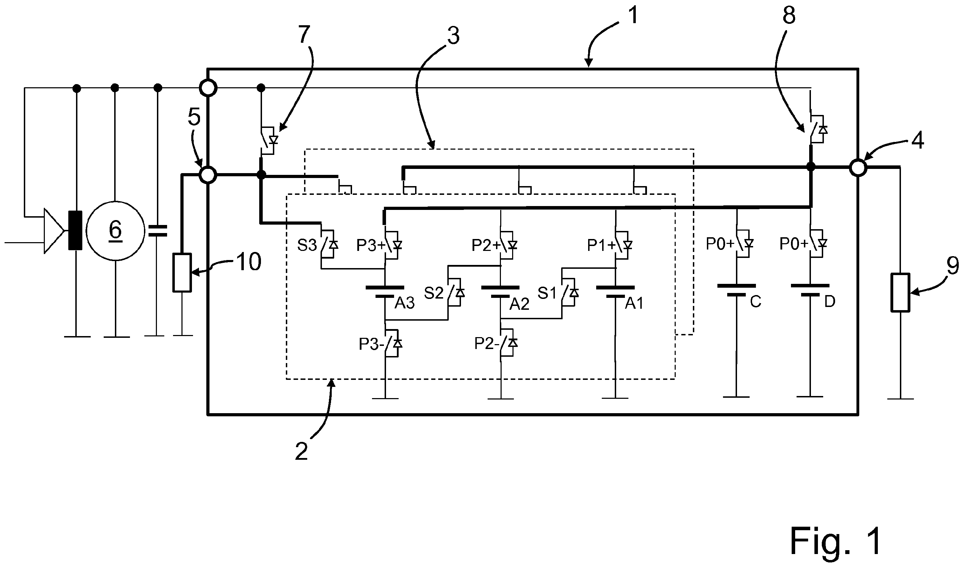

Eine Zweispannungsbatterie 1 nach Fig. 1 umfasst insgesamt acht Batteriezellblöcke A1, A2, A3, C, D. Von den insgesamt acht Batteriezellblöcken A1, A2, A3, C, D bilden ein erster Batteriezellblock A1 und zwei weitere Batteriezellblöcke A2, A3 eine erste Gruppe 2 von Batteriezellblöcken A1, A2, A3. Zu der ersten Gruppe 2 von Batteriezellblöcken A1, A2, A3 sind zwei dritte Batteriezellblöcke C, D sowie eine in dem Prinzipschaltbild nach Fig. 1 verdeckt dargestellte zweite Gruppe 3 mit drei weiteren Batteriezellblöcken parallel verschaltet.

Den Batteriezellblöcken A1, A2, A3, C, D sind als Leistungsschaltelemente Parallelverbindungsschalter P0+, P1+, P2+, P3+, P2-, P3- und Serienverbindungsschalter S1, S2, S3 zugeordnet. Diese können insbesondere als bidirektionale Halbleiterschalter oder Relais ausgeführt sein. Die Zuordnung der Leistungsschaltelemete P0+, P1+, P2+, P3+, P2-, P3-, S1, S2, S3 zu den Batteriezellblöcken A1, A2, A3, C, D erfolgt so, dass in einer ersten Verbindungsanordnung der erste Batteriezellblock A1 und die weiteren Batteriezellblöcke A2, A3 der ersten Gruppe 2 und der zweiten Gruppe 3 von Batteriezellblöcken A1, A2, A3 parallel zu den dritten Batteriezellblöcken C, D verschaltet sind. In der ersten Verbindungsanordnung ist an einem ersten Anschlusspunkt 4 der Zweispannungsbatterie 1 eine erste Spannung bereitgestellt. In einer zweiten Verbindungsanordnung sind der erste Batteriezellblock A1 und die weiteren Batteriezellblöcke A2, A3 der ersten Gruppe 2 von Batteriezellblöcken A1, A2, A3 und der zweiten Gruppe 3 von Batteriezellblöcken zueinander in Reihe verschaltet. In der zweiten Verbindungsanordnung wird an einem zweiten Anschlusspunkt 5 der Zweispannungsbatterie 1 eine höhere zweite Spannung bereitgestellt. Optional kann in der zweiten Verbindungsanordnung zusätzlich die erste Spannung an dem ersten Anschlusspunkt 4 bereitgestellt werden.

Der Zweispannungsbatterie 1 ist ein Starter-Generator 6 zugeordnet. Der Starter-Generator 6 kann wahlweise über ein erstes Leistungsschaltelement 7 bei der zweiten Spannung und/oder ein zweites Leistungsschaltelement 8 bei der ersten Spannung verbunden werden. Der Starter-Generator 6 kann von der Zweispannungsbatterie 1 betrieben oder im generatorischen Betrieb genutzt werden, um Bremsenergie in elektrische Energie zu wandeln und in die Zweispannungsbatterie 1 zu speisen.

An dem ersten Anschlusspunkt 4 der Zweispannungsbatterie 1 ist wenigstens ein erster elektrischer Verbraucher 9 angeschlossen, welcher bei der ersten Spannung betrieben wird. An dem zweiten Anschlusspunkt 5 der Zweispannungsbatterie 1 kann in analoger Weise wenigstens ein zweiter elektrischer Verbraucher 10 angeschlossen werden, der bei der zweiten Spannung betrieben wird. Optional können zur messtechnischen Erfassung der ersten Spannung und/oder der zweiten Spannung und eines für den wenigstens einen ersten elektrischen Verbraucher 9 bereitgestellten Stroms und/oder eines für den wenigstens einen zweiten elektrischen Verbraucher 10 bereitgestellten elektrischen Stroms Mittel zur Durchführung einer Strom- und Spannungsmessung an dem ersten Anschlusspunkt 4 und/oder an dem zweiten Anschlusspunkt 5 vorgesehen sein. Die entsprechenden Messmittel sind in der Prinzipskizze nach Fig. 1 nicht dargestellt.

Um eine Kapazität, welche von der Zweispannungsbatterie 1 bereitgestellt wird, im Betrieb optimal zu nutzen, ist erfindungsgemäß eine intelligente Betätigung des dem ersten Batteriezellblocks A1 zugeordneten Parallelverbindungsschalters P1 + vorgesehen. Es ist hierbei so, dass in der zweiten Verbindungsanordnung, in der die zu der ersten Gruppe 2 zusammengefassten Batteriezellblöcke A1, A2, A3 seriell verbunden sind und die zweite Spannung an dem zweiten Anschlusspunkt 5 bereitgestellt wird, der Parallelverbindungsschalter P1+ des ersten Batteriezellblocks A1 betriebszustandsabhängig geöffnet oder geschlossen werden kann. Als Betriebszustand kommt hierbei insbesondere ein Fahrzustand des Fahrzeugs, ein Batteriezustand der Zweispannungsbatterie 1 oder ein Lastzustand eines den ersten elektrischen Verbraucher 9 und den zweiten elektrischen Verbraucher 10 aufweisenden Bordnetzes des Fahrzeugs infrage.

Nachfolgend wird das erfindungsgemäße Betriebsverfahren für die Zweispannungsbatterie 1 exemplarisch erläutert anhand von vier Zustandsdiagrammen. Es ist dabei angenommen, dass 12V als erste Spannung und 48V als zweite Spannung von der Zweispannungsbatterie 1 bereitgestellt werden.

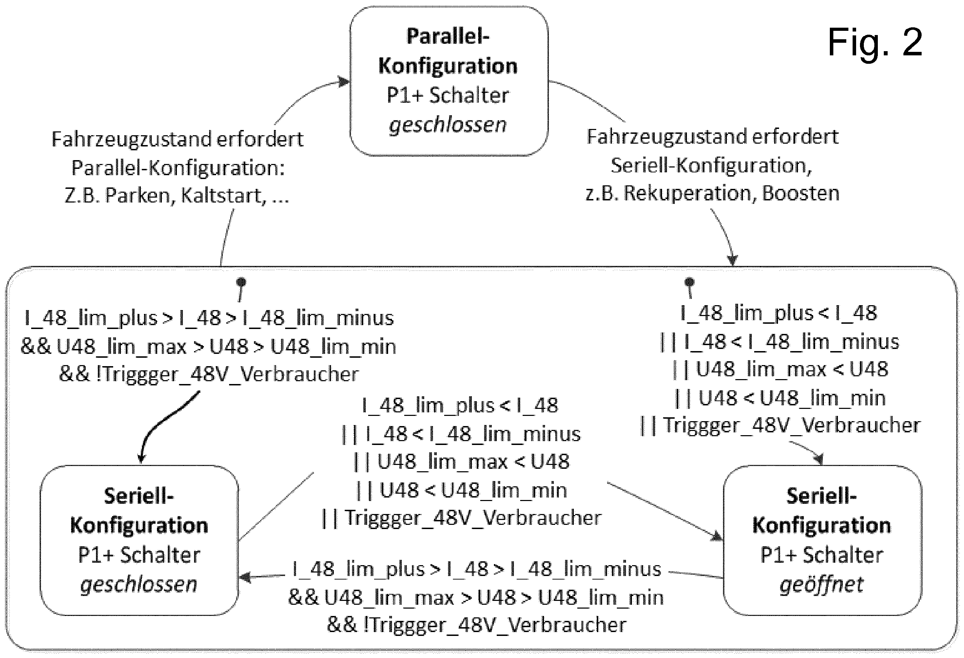

Fig. 2 zeigt ein erstes Zustandsdiagramm zu dem erfindungsgemäßen Betriebsverfahren für die Zweispannungsbatterie 1. Es ist hierbei so, dass der Parallelverbindungsschalter P1+ des ersten Batteriezellblocks A1 in einer Parallelkonfiguration (erste Verbindungsanordnung) der Batteriezellblöcke A1, A2, A3 üblicherweise geschlossen ist. In einer Seriellkonfiguration (zweite Verbindungsanordnung) der Zweispannungsbatterie 1 wird demgegenüber betriebszustandsabhängig der Parallelverbindungsschalter P1+ wahlweise geöffnet oder geschlossen. Insbesondere wird der Parallelverbindungsschalter P1+ geschlossen, wenn ein bei der zweiten Spannung U48 bereitgestellter Strom I_48 kleiner ist als ein zweiter oberer Grenzstrom I_48_lim_plus und größer ist als ein erster unterer Grenzstrom I_48_lim_minus und wenn die zweite Spannung U48 kleiner ist als ein zweiter Maximalspannungswert U48_lim_max und größer ist als ein zweiter Minimalspannungswert U48_lim_min und wenn kein bei der zweiten Spannung U48 betriebener elektrischer Verbraucher 10 einen höheren Bedarf für den Strom I_48 voranmeldet. Der Parallelverbindungsschalter P1+ wird demgegenüber geöffnet, wenn der bei der zweiten Spannung U48 bereitgestellte Strom I_48 größer ist als der zweite obere Grenzstrom I_48_lim_plus oder wenn der bei der zweiten Spannung U48 bereitgestellte Strom I_48 kleiner ist als der zweite untere Grenzstrom I_48_lim_minus oder wenn die zweite Spannung U48 größer ist als der zweite Maximalspannungswert U48_lim_max oder wenn die zweite Spannung U48 kleiner ist als der zweite Minimalspannungsgrenzwert U48_lim_min oder wenn der wenigstens eine bei der zweiten Spannung U48 betriebene elektrische Verbraucher 10 einen höheren Bedarf für den Strom I_48 voranmeldet. Es sind insofern Spannungs- und Stromgrenzwerte I_48_lim_plus, I_48_lim_minus, U48_lim_max, U48_lim_min definiert und es können mittels der dem zweiten Anschlusspunkt 5 zugeordneten Messmittel ein Lade- oder Entladestrom für Zweispannungsbatterie 1 sowie die Größe der zweiten Spannung U48 ermittelt werden. Der Parallelverbindungsschalter P1+ für den ersten Batteriezellblock A1 wird insofern deaktiviert beziehungsweise geöffnet, wenn die Grenzwerte für den Strom und auf die die Spannung verletzt werden und zusätzlich, wenn intelligente Verbraucher 10 in dem 48V-Bordnetz der Zweispannungsbatterie 1 rechtzeitig vor einer großen Stromentnahme dies per Kommunikation mitteilen. Somit kann die Zweispannungsbatterie 1 bereits im Vorfeld der großen Stromentnahme die Bordnetze entkoppeln, falls ansonsten die definierten Grenzwerte über- beziehungsweise unterschritten werden beziehungsweise dies anzunehmen ist. Mit dem erfindungsgemäßen Verfahren kann also das 12V-Bordnetz in kritischen Betriebssituationen des 48V-Bordnetzes von ebendiesen getrennt und stabilisiert werden.

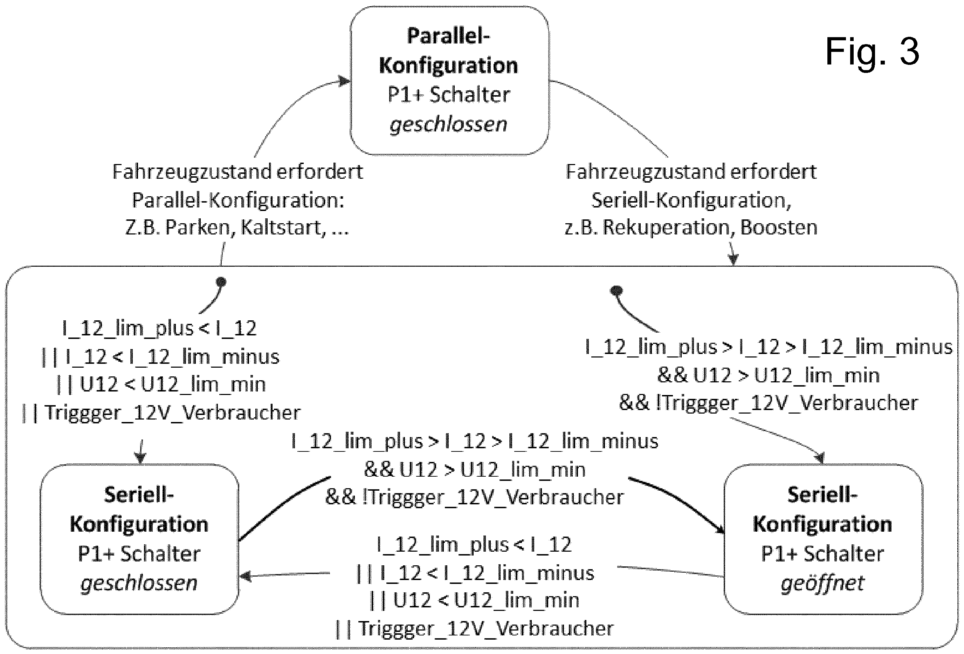

Eine weitere Stabilisierung für das 12V-Bordnetz ergibt sich gemäß dem Zustandsdiagramm nach Fig. 3, wenn in der seriellen Konfiguration der Parallelverbindungsschalter P1+ geschlossen wird, sofern ein bei der ersten Spannung U12 bereitgestellter Strom I_12 kleiner ist als ein erster unterer Grenzstrom I_12_lim_minus oder wenn der bei der ersten Spannung U12 bereitgestellte Strom I_12 größer ist als ein erster Obergrenzstrom I_12_lim_plus oder wenn die erste Spannung U12 kleiner ist als ein erster Minimalspannungsgrenzwert U12_lim_min oder wenn ein bei der ersten Spannung U12 betriebener elektrischer Verbraucher 9 einen höheren Bedarf für den Strom I_12 voranmeldet. Demgegenüber wird der Parallelverbindungsschalter P1+ geöffnet, wenn der bei der ersten Spannung U12 betriebene elektrischer Strom I_12 größer ist als der erste untere Grenzstrom I_12_lim_minus und kleiner ist als der erste obere Grenzstrom I_12_lim_plus und wenn die erste Spannung U12 größer ist als der erste Minimalspannungsgrenzwert U12_lim_min und wenn kein bei der ersten Spannung U12 betriebener elektrische Verbraucher 9 einen höheren Bedarf für den Strom I_12 voranmeldet. Erfindungsgemäß gelingt es insofern, die Kapazität für das 12V-Bordnetz bedarfsgerecht anzupassen und insbesondere zu erhöhen. Sicherheitskritische Verbraucher 9 im 12V-Bordnetz können insofern zuverlässig mit elektrischer Energie versorgt und kritische Fahrzustände vermieden werden.

In der seriellen Konfiguration (zweite Verbindungsanordnung) der Zweispannungsbatterie 1 kann für besondere Fahrzustände überdies eine Betätigung des Parallelverbindungsschalters P1+ vorgesehen werden. Beispielsweise wird der Parallelverbindungsschalter P1+ zur Entkoppelung der Bordnetze geöffnet, wenn das Fahrzeug stark beschleunigt, aktiv segelt oder eine Energierückgewinnung in einem hohen Maße vorliegt. Während einer normalen Fahrt, während des Parkens oder bei einer normalen Energierückgewinnung wird demgegenüber der Parallelverbindungsschalter P1+ für den ersten Batteriezellblock A1 geschlossen.

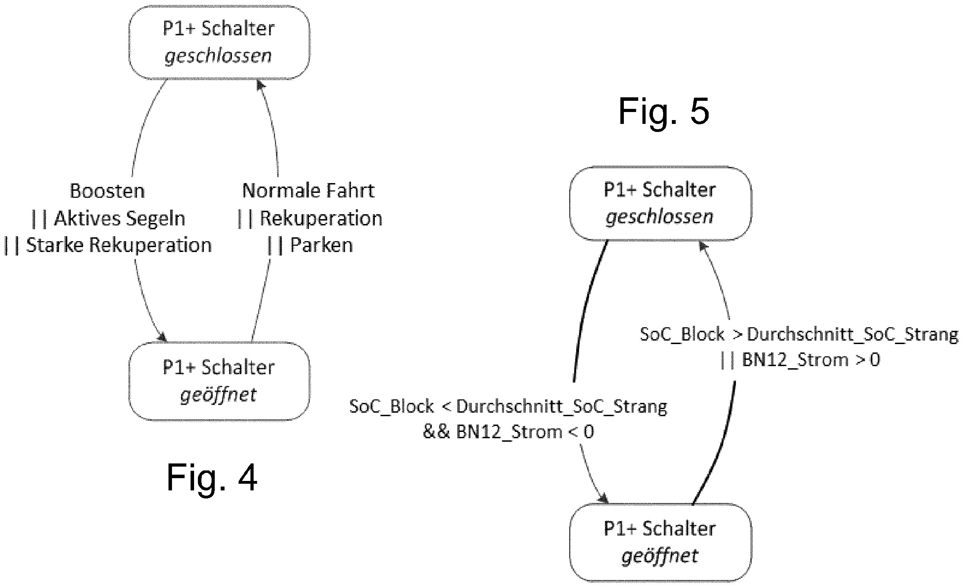

Fig. 5 zeigt ein Zustandsdiagramm für die erste Verbindungsanordnung (parallele Konfiguration) der Batteriezellblöcke A1, A2, A3, C, D. Es ist hier so, dass ein unterschiedlich hoher Ladezustand für die Batteriezellblöcke A1, A2, A3, C, D ausgeglichen werden kann, indem der Parallelverbindungsschalter P1+ bedarfsgerecht geöffnet oder geschlossen wird. Beispielsweise kann der erste Batteriezellblock A1 der ersten Gruppe 2 von Batteriezellblöcken A1, A2, A3 einen niedrigen Ladungszustand aufweisen als die weiteren Batteriezellblöcke A2, A3 der Gruppen 2 von Batteriezellblöcken A2, A3, da sie bei geschlossenen Parallelverbindungsschalter P1+ in der seriellen Konfiguration im Zustand der Energierückgewinnung nicht so stark aufgeladen werden wie die weiteren Batteriezellblöcke A2, A3 der ersten Gruppe 2 von Batteriezellblöcken A1, A2, A3. Andererseits können die ersten Batteriezellblöcke A1 einen höheren Ladezustand aufweisen als die weiteren Batteriezellblöcke A2, A3 der ersten Gruppe 2 von Batteriezellblöcken A1, A2, A3, da bei geschlossenen Parallelverbindungsschalter P1+ und einer starker Belastung im 48V-Bordnetz etwa beim Beschleunigen der Blockstrom durch die weiteren Batteriezellblöcke A2, A3 besonders hoch ist. Um Ladungsunterschiede zwischen den Batteriezellblöcken A1, A2, A3, C, D auszugleichen, können der Parallelverbindungsschalter P1+ und gegebenenfalls weitere Parallelverbindungsschalter P0+, P2+, P3+ während einer Energieentnahme in der ersten Verbindungsanordnung (Parallelkonfiguration) geöffnet werden, sodass eine ausgeglichene Ladungsbilanz für die verschiedenen Batteriezellblöcke A1, A2, A3, C, D hergestellt wird. Beispielsweise wird der Parallelverbindungsschalter P1+ für den ersten Batteriezellblock A1 in der Parallelkonfiguration geöffnet, wenn eine Energierückgewinnungssituation vorliegt und der Ladezustand für den ersten Batteriezellblock A1 kleiner ist als ein durchschnittlicher Ladezustand der Batteriezellblöcke A1, A2, A3 der ersten Gruppe 2 von Batteriezellblock A1, A2, A3. Analog wird der Parallelverbindungsschalter P1+ geschlossen, wenn der Ladezustand für den Batteriezellblock A1 größer ist als ein durchschnittlicher Ladezustand in der ersten Gruppe 2 von Batteriezellblöcken A1, A2, A3 oder eine Energierückgewinnungssituation nicht vorliegt.

Gleiche Bauteile und Bauteilfunktionen sind durch gleiche Bezugszeichen gekennzeichnet.

### Bezugszeichenliste

- 1: Zweispannungsbatterie
- 2: Gruppe von Batteriezellblöcken
- 3: Gruppe von Batteriezellblöcken
- 4: Anschlusspunkt
- 5: Anschlusspunkt
- 6: Starter-Generator
- 7: Leistungsschaltelement
- 8: Leistungsschaltelement
- 9: elektrischer Verbraucher
- 10: elektrischer Verbraucher
- A1: Batteriezellblock
- A2: Batteriezellblock
- A3: Batteriezellblock
- C: Batteriezellblock
- D: Batteriezellblock
- I_12: erster Strom
- I_12_lim_plus: erster oberer Grenzstrom
- I_12_lim_minus: erster unterer Grenzstrom
- I_48: zweiter Strom
- I_48_lim_plus: zweiter oberer Grenzstrom
- I_48_lim_minus: zweiter unterer Grenzstrom
- P0+: Parallelverbindungsschalter (Leistungsschaltelement)
- P1+: Parallelverbindungsschalter (Leistungsschaltelement)
- P2+: Parallelverbindungsschalter (Leistungsschaltelement)
- P2-: Parallelverbindungsschalter (Leistungsschaltelement)
- P3+: Parallelverbindungsschalter (Leistungsschaltelement)
- P3-: Parallelverbindungsschalter (Leistungsschaltelement)
- S1: Serienverbindungsschalter (Leistungsschaltelement)
- S2: Serienverbindungsschalter (Leistungsschaltelement)
- S3: Serienverbindungsschalter (Leistungsschaltelement)
- U12: erste Spannung
- U12_lim_min: erster Minimalspannungsgrenzwert
- U48: zweite Spannung
- U48_lim_max: zweiter Maximalspannungsgrenzwert
- U48_lim_min: zweiter Minimalspannungsgrenzwert

## Patentansprüche

1. Betriebsverfahren für eine Zweispannungsbatterie (1) eines Fahrzeugs
• umfassend eine Mehrzahl von Batteriezellblöcken (A1, A2, A3, C, D) und
• umfassend eine Batterieelektronik mit einer Mehrzahl von Leistungsschaltelementen (P0+, P1+, P2+, P3+, P2-, P3-, S1, S2, S3) zum wahlweisen parallelen und/oder seriellen Verbinden einzelner Batteriezellblöcke (A1, A2, A3, C, D),
wobei ein erster Batteriezellblock (A1) und wenigstens ein weiterer Batteriezellblock (A2, A3) einer Gruppe (2, 3) von Batteriezellblöcken (A1, A2, A3)
• in einer ersten Verbindungsanordnung parallel geschaltet werden zum Bereitstellen einer ersten Spannung (U12) zwischen einem ersten Anschlusspunkt (4) und einem Massenanschluss und
• in einer zweiten Verbindungsanordnung seriell verbunden werden zum Bereitstellen einer zweiten Spannung (U48) zwischen einem zweiten Anschlusspunkt (5) und dem Massenanschluss,
• wobei jedem Batteriezellblock (A1, A2, A3) der Gruppe (2, 3) von Batteriezellblöcken (A1, A2, A3) wenigstens eines der Leistungsschaltelemente (P0+, P1+, P2+, P3+, P2-, P3-, S1, S2, S3) als Parallelverbindungsschalter (P1+, P...) und eines der Leistungsschaltelemente (P0+, P1+, P2+, P3+, P2-, P3-, S1, S2, S3) als Serienverbindungsschalter (S1) zum Herstellen der parallelen und/oder seriellen Verbindung zugeordnet ist und
wobei in der ersten Verbindungsanordnung die Parallelverbindungsschalter (P1+, P2+, P3+, P2-, P3-) aller Batteriezellblöcke (A1, A2, A3) der Gruppe (2, 3) von Batteriezellblöcken (A1, A2, A3) in eine Schließstellung verbracht sind und die Serienverbindungsschalter (S1, S2, S3) aller Batterieblöcke (A1, A2, A3) der Gruppe (2, 3) von Batteriezellblöcken (A1, A2, A3) in eine Öffnungsstellung verbracht sind, wobei in der ersten Verbindungsanordnung wenigstens ein dritter Batteriezellblock (C, D) zu der Gruppe (2, 3) von Batteriezellblöcken (A1, A2, A3) parallel verschaltbar ist, in der zweiten Verbindungsanordnung, in der
• durch Schließen der Serienverbindungsschalter (S1, S2, S3) aller Batteriezellblöcke (A1, A2, A3) der Gruppe (2, 3) von Batteriezellblöcken (A1, A2, A3) und
• durch Öffnen der Parallelverbindungsschalter (P2+, P3+, P2-, P3-) der weiteren Batterieblöcke (A2, A3) der Gruppe (2, 3) von Batteriezellblöcken (A1, A2, A3)
die Batteriezellblöcke (A1, A2, A3) der Gruppe (2, 3) von Batteriezellblöcken (A1, A2, A3) zum Bereitstellen einer zweiten Spannung (U48) seriell verschaltet sind, **dadurch gekennzeichnet, dass**
in der zweiten Verbindungsanordnung, der Parallelverbindungsschalter (P1+) des ersten Batteriezellblocks (A1) in Abhängigkeit von einem Betriebszustand des Fahrzeugs wahlweise in eine Schließstellung oder in eine Öffnungsstellung verbracht wird, wobei in der Schließstellung des Parallelverbindungsschalters (P1+) des ersten Batteriezellblocks (A1) zur Erweiterung der Kapazität des zur Bereitstellung der ersten Spannung (U12) vorgesehenen wenigstens einen dritten Batterieblocks (B, C) und zur Stabilisierung der Energieversorgung bei der ersten Spannung (U12) der erste Batteriezellblock (A1) der Gruppe (2, 3) von Batteriezellblöcken (A1, A2) zu dem wenigstens einen dritten Batteriezellblock (C, D) parallel geschaltet werden kann.

2. Betriebsverfahren nach Anspruch 1, **dadurch gekennzeichnet, dass** das Verbringen des Parallelverbindungsschalters (P1+) des ersten Batteriezellblocks (A1) in die Schließstellung und/oder in die Öffnungsstellung in Abhängigkeit von einem Fahrzustand und/oder von einem Batteriezustand und/oder von einem Lastzustand erfolgt.

3. Betriebsverfahren nach Anspruch 1 oder 2, **dadurch gekennzeichnet, dass** an dem der ersten Spannung (U12) zugeordneten ersten Anschlusspunkt (4) der Zweispannungsbatterie (1) eine Strom- und/oder Spannungsmessung durchgeführt wird und dass in der zweiten Verbindunganordnung der Parallelverbindungsschalter (P1+) geschlossen wird, wenn ein bei der ersten Spannung (U12) bereitgestellter Strom (I_12) kleiner ist als ein erster unterer Grenzstrom (I_12_lim_minus) oder wenn der bei der ersten Spannung (U12) bereitgestellte Strom (I_12) größer ist als ein erster oberer Grenzstrom (I_12_lim_plus) oder wenn die erste Spannung (U12) kleiner ist als ein erster Minimalspannungsgrenzwert (U12_lim_min) oder wenn ein bei der ersten Spannung (U12) betriebener elektrischer Verbraucher (9) einen erhöhten Bedarf für den Strom (I_12) voranmeldet.

4. Betriebsverfahren nach einem der Ansprüche 1 bis 3, **dadurch gekennzeichnet, dass** an dem ersten Anschlusspunkt (4) der Zweispannungsbatterie (1) der Strom (I_12) und/oder die Spannung (U12) gemessen werden und dass in der zweiten Verbindunganordnung der Parallelverbindungsschalter (P1+) geöffnet wird, wenn der bei der ersten Spannung (U12) bereitgestellte Strom (I_12) größer ist als der erste untere Grenzstrom (I_12_lim_minus) und kleiner ist als der erste obere Grenzstrom (I_12_lim_plus) und wenn die erste Spannung (U12) größer ist als der erste Minimalspannungsgrenzwert (U12_lim_min) und wenn kein bei der ersten Spannung (U12) betriebener elektrischer Verbraucher (9) einen erhöhten Bedarf für den Strom (I_12) voranmeldet.

5. Betriebsverfahren nach einem der Ansprüche 1 bis 4, **dadurch gekennzeichnet, dass** an dem der zweiten Spannung (U48) zugeordneten zweiten Anschlusspunkt (5) der Zweispannungsbatterie (1) eine Strom- und/oder Spannungsmessung durchgeführt wird und dass in der zweiten Verbindunganordnung der Parallelverbindungsschalter (P1+) geschlossen wird, wenn ein bei der zweiten Spannung (U48) bereitgestellter Strom (I_48) kleiner ist als ein zweiter oberer Grenzstrom (I_48_lim_plus) und größer ist als ein zweiter unterer Grenzstrom (I_48_lim_minus) und wenn die zweite Spannung (U48) kleiner ist als ein zweiter Maximalspannungsgrenzwert (U48_lim_max) und größer ist als ein zweiter Minimalspannungsgrenzwert (U48_lim_min) und wenn kein bei der zweiten Spannung (U48) betriebener elektrischer Verbraucher (10) einen erhöhten Bedarf für den Strom (I_48) voranmeldet.

6. Betriebsverfahren nach einem der Ansprüche 1 bis 5, **dadurch gekennzeichnet, dass** an dem zweiten Anschlusspunkt (5) der Zweispannungsbatterie (1) der Strom (I_48) und/oder die Spannung (U48) gemessen werden und dass in der zweiten Verbindunganordnung der Parallelverbindungsschalter (P1+) geöffnet wird, wenn der bei der zweiten Spannung (U48) bereitgestellter Strom (I_48) größer ist als der zweiter oberer Grenzstrom (I_48_lim_plus) oder wenn der bei der zweiten Spannung (U48) bereitgestellter Strom (I_48) kleiner ist als der zweite unterer Grenzstrom (I_48_lim_minus) oder wenn die zweite Spannung (U48) größer ist als der zweiter Maximalspannungsgrenzwert (U48_lim_max) oder wenn die zweite Spannung (U48) kleiner ist als der zweiter Minimalspannungsgrenzwert (U48_lim_min) oder wenn ein bei der zweiten Spannung (U48) betriebener elektrischer Verbraucher (10) einen erhöhten Bedarf für den Strom (I_48) voranmeldet.

7. Betriebsverfahren nach einem der Ansprüche 1 bis 6, **dadurch gekennzeichnet, dass** in der zweiten Verbindungsanordnung der Zweispannungsbatterie (1) der Parallelverbindungsschalter (P1+) geschlossen wird, wenn das Fahrzeug hält oder eine Energierückgewinnung in einem moderaten Maß durchgeführt wird.

8. Betriebsverfahren nach einem der Ansprüche 1 bis 7, **dadurch gekennzeichnet, dass** bei einem Kaltstart des Fahrzeugs und/oder beim Parken des Fahrzeugs die Zweispannungsbatterie (1) in die erste Verbindungsanordnung verbracht wird und der Parallelverbindungsschalter (P1+) geschlossen wird.

9. Betriebsverfahren nach einem der Ansprüche 1 bis 8, **dadurch gekennzeichnet, dass** in der zweiten Verbindungsanordnung der Zweispannungsbatterie (1) der Parallelverbindungsschalter (P1+) geöffnet wird, wenn das Fahrzeug stark beschleunigt wird oder eine starke Energierückgewinnung durchgeführt wird oder das Fahrzeug im Fahrzustand des aktiven Segels betrieben wird.

10. Betriebsverfahren nach einem der Ansprüche 1 bis 9, **dadurch gekennzeichnet, dass** in der zweiten Verbindungsanordnung der Zweispannungsbatterie (1) der Parallelverbindungsschalter (P1+) geöffnet wird, wenn das Fahrzeug elektromotorisch angetrieben wird.

11. Betriebsverfahren nach einem der Ansprüche 1 bis 10, **dadurch gekennzeichnet, dass** in der ersten Verbindungsanordnung der Zweispannungsbatterie (1) ein Ladezustand der verschiedenen Batteriezellblöcke (A1, A2, A3, C, D) durch das bedarfsgerechte Öffnen und/oder Schließen des Parallelverbindungsschalters (P1+) ausgeglichen wird.

## Claims

1. Operating method for a dual-voltage battery (1) for a vehicle
• comprising a plurality of battery cell blocks (A1, A2, A3, C, D) and
• comprising battery electronics having a plurality of power switching elements (P0+, P1+, P2+, P3+, P2-, P3-, S1, S2, S3) for selectively connecting individual battery cell blocks (A1, A2, A3, C, D) in parallel and/or in series,
wherein a first battery cell block (A1) and at least one further battery cell block (A2, A3) of a group (2, 3) of battery cell blocks (A1, A2, A3)
• are connected in parallel in a first connection arrangement in order to provide a first voltage (U12) between a first terminal point (4) and a ground terminal and
• are connected in series in a second connection arrangement in order to provide a second voltage (U48) between a second terminal point (5) and the ground terminal,
• wherein at least one of the power switching elements (P0+, P1+, P2+, P3+, P2-, P3-, S1, S2, S3) as parallel connection switch (P1+, P...) and one of the power switching elements (P0+, P1+, P2+, P3+, P2-, P3-, S1, S2, S3) as series connection switch (S1) is associated with each battery cell block (A1, A2, A3) of the group (2, 3) of battery cell blocks (A1, A2, A3) in order to establish the parallel and/or series connection and
wherein, in the first connection arrangement, the parallel connection switches (P1+, P2+, P3+, P2-, P3-) of all the battery cell blocks (A1, A2, A3) of the group (2, 3) of battery cell blocks (A1, A2, A3) are put into a closed position and the series connection switches (S1, S2, S3) of all the battery blocks (A1, A2, A3) of the group (2, 3) of battery cell blocks (A1, A2, A3) are put into an open position, wherein, in the first connection arrangement, at least one third battery cell block (C, D) can be connected in parallel with the group (2, 3) of battery cell blocks (A1, A2, A3),
in the second connection arrangement, in which
• by closing the series connection switches (S1, S2, S3) of all the battery cell blocks (A1, A2, A3) of the group (2, 3) of battery cell blocks (A1, A2, A3) and
• by opening the parallel connection switches (P2+, P3+, P2-, P3-) of the further battery blocks (A2, A3) of the group (2, 3) of battery cell blocks (A1, A2, A3),
the battery cell blocks (A1, A2, A3) of the group (2, 3) of battery cell blocks (A1, A2, A3) are connected in series in order to provide a second voltage (U48),
**characterized in that**,
in the second connection arrangement, the parallel connection switch (P1+) of the first battery cell block (A1) is put selectively into a closed position or into an open position depending on an operating state of the vehicle, wherein, in the closed position of the parallel connection switch (P1+) of the first battery cell block (A1), the first battery cell block (A1) of the group (2, 3) of battery cell blocks (A1, A2) can be connected in parallel with the at least one third battery cell block (C, D) in order to increase the capacity of the at least one third battery block (B, C) designed to provide the first voltage (U12) and in order to stabilize the energy supply at the first voltage (U12).

2. Operating method according to claim 1, **characterized in that** the parallel connection switch (P1+) of the first battery cell block (A1) is put into the closed position and/or into the open position depending on a driving state and/or on a battery state and/or on a load state.

3. Operating method according to claim 1 or 2, **characterized in that** a current and/or voltage measurement is performed at the first terminal point (4) of the dual-voltage battery (1), which terminal point is associated with the first voltage (U12), and **in that**, in the second connection arrangement, the parallel connection switch (P1+) is closed when a current (I_12) provided at the first voltage (U12) is smaller than a first lower limit current (I_12_lim_minus) or when the current (I_12) provided at the first voltage (U12) is greater than a first upper limit current (I_12_lim_plus) or when the first voltage (U12) is smaller than a first minimum voltage limit value (U12_lim_min) or when an electrical consumer (9) operated at the first voltage (U12) notifies an increased need for the current (I_12) in advance.

4. Operating method according to one of claims 1 to 3, **characterized in that** the current (I_12) and/or the voltage (U12) are measured at the first terminal point (4) of the dual-voltage battery (1), and **in that**, in the second connection arrangement, the parallel connection switch (P1+) is opened when the current (I_12) provided at the first voltage (U12) is greater than the first lower limit current (I_12_lim_minus) and is smaller than the first upper limit current (I_12_lim_plus) and when the first voltage (U12) is greater than the first minimum voltage limit value (U12_lim_min) and when no electrical consumer (9) operated at the first voltage (U12) notifies an increased need for the current (I_12) in advance.

5. Operating method according to one of claims 1 to 4, **characterized in that** a current and/or voltage measurement is performed at the second terminal point (5) of the dual-voltage battery (1), which terminal point is associated with the second voltage (U48), and **in that**, in the second connection arrangement, the parallel connection switch (P1+) is closed when a current (I_48) provided at the second voltage (U48) is smaller than a second upper limit current (I_48_lim_plus) and is greater than a second lower limit current (I_48_lim_minus) and when the second voltage (U48) is smaller than a second maximum voltage limit value (U48_lim_max) and is greater than a second minimum voltage limit value (U48_lim_min) and when no electrical consumer (10) operated at the second voltage (U48) notifies an increased need for the current (I_48) in advance.

6. Operating method according to one of claims 1 to 5, **characterized in that** the current (I_48) and/or the voltage (U48) are measured at the second terminal point (5) of the dual-voltage battery (1), and **in that**, in the second connection arrangement, the parallel connection switch (P1+) is opened when the current (I_48) provided at the second voltage (U48) is greater than the second upper limit current (I_48_lim_plus) or when the current (I_48) provided at the second voltage (U48) is smaller than the second lower limit current (I_48_lim_minus) or when the second voltage (U48) is greater than the second maximum voltage limit value (U48_lim_max) or when the second voltage (U48) is smaller than the second minimum voltage limit value (U48_lim_min) or when an electrical consumer (10) operated at the second voltage (U48) notifies an increased need for the current (I_48) in advance.

7. Operating method according to one of Claims 1 to 6, **characterized in that**, in the second connection arrangement of the dual-voltage battery (1), the parallel connection switch (P1+) is closed when the vehicle stops or energy recovery is performed to a moderate extent.

8. Operating method according to one of claims 1 to 7, **characterized in that** the dual-voltage battery (1) is put into the first connection arrangement and the parallel connection switch (P1+) is closed when cold starting the vehicle and/or when parking the vehicle.

9. Operating method according to one of claims 1 to 8, **characterized in that**, in the second connection arrangement of the dual-voltage battery (1), the parallel connection switch (P1+) is opened when the vehicle is sharply accelerated or significant energy recovery is performed or the vehicle is operated in the active coasting driving state.

10. Operating method according to one of claims 1 to 9, **characterized in that**, in the second connection arrangement of the dual-voltage battery (1), the parallel connection switch (P1+) is opened when the vehicle is driven by electric motor.

11. Operating method according to one of claims 1 to 10, **characterized in that**, in the first connection arrangement of the dual-voltage battery (1), a state of charge of the different battery cell blocks (A1, A2, A3, C, D) is balanced by opening and/or closing the parallel connection switch (P1+) as needed.

## Revendications

1. Procédé de fonctionnement d'une batterie bitension (1) d'un véhicule, ladite batterie
• comprenant une pluralité de blocs de cellules de batterie (A1, A2, A3, C, D) et
• comprenant une électronique de batterie pourvue d'une pluralité d'éléments de commutation de puissance (P0+, P1+, P2+, P3+, P2-, P3-, S1, S2, S3) destinés à relier en parallèle et/ou en série au choix des blocs de cellules de batterie individuels (A1, A2, A3, C, D),
un premier bloc de cellules de batterie (A1) et au moins un autre bloc de cellules de batterie (A2, A3) d'un groupe (2, 3) de blocs de cellules de batterie (A1, A2, A3)
• étant montés en parallèle dans un premier agencement de connexion pour fournir une première tension (U12) entre un premier point de connexion (4) et une borne de masse, et
• étant montés en série dans un deuxième agencement de connexion pour fournir une deuxième tension (U48) entre un deuxième point de connexion (5) et la borne de masse,
• chaque bloc de cellules de batterie (A1, A2, A3) du groupe (2, 3) de blocs de cellules de batterie (A1, A2, A3) étant associé à l'un au moins des éléments de commutation de puissance (P0+, P1+, P2+, P3+, P2-, P3-, S1, S2, S3) comme commutateur de connexion parallèle (P1+, P...) et à l'un des éléments de commutation de puissance (P0+, P1+, P2+, P3+, P2-, P3-, S1, S2, S3) comme commutateur de connexion série (S1) pour établir la connexion parallèle et/ou série et
dans le premier agencement de connexion, les commutateurs de connexion parallèle (P1+, P2+, P3+, P2-, P3-) de tous les blocs de cellules de batterie (A1, A2, A3) du groupe (2, 3) de blocs de cellules de batterie (A1, A2, A3) étant amenés en position fermée et les commutateurs de connexion série (S1, S2, S3) de tous les blocs de batterie (A1, A2, A3) du groupe (2, 3) de blocs de cellules de batterie (A1, A2, A3) étant amenés en position ouverte, au moins un troisième bloc de cellules de batterie du premier agencement de connexion (C, D) pouvant être monté en parallèle avec le groupe (2, 3) de blocs de cellules de batterie (A1, A2, A3),
dans le deuxième agencement de connexion dans lequel
• par fermeture des commutateurs de connexion série (S1, S2, S3) de tous les blocs de cellules de batterie (A1, A2, A3) du groupe (2, 3) de blocs de cellules de batterie (A1, A2, A3) et
• par ouverture des commutateurs de connexion parallèle (P2+, P3+, P2-, P3-) des autres blocs batterie (A2, A3) du groupe (2, 3) de blocs de cellules batterie (A1, A2, A3),
les blocs de cellules de batterie (A1, A2, A3) du groupe (2, 3) de blocs de cellules de batterie (A1, A2, A3) étant en série pour fournir une deuxième tension (U48)
**caractérisé en ce que**
dans le deuxième agencement de connexion, le commutateur de connexion parallèle (P1 +) du premier bloc de cellules de batterie (A1) est amené au choix en position fermée ou en position ouverte en fonction d'un état de fonctionnement du véhicule, dans la position fermée du commutateur de connexion parallèle (P1+) du premier bloc de cellules de batterie (A1) le premier bloc de cellules de batterie (A1) du groupe (2, 3) de blocs de cellules de batterie (A1, A2) pouvant être monté en parallèle avec l'au moins un troisième bloc de cellules de batterie (C, D) pour augmenter la capacité de l'au moins un troisième bloc de batterie (B, C), prévu pour fournir la première tension (U12), et pour stabiliser l'alimentation en énergie à la première tension (U12).

2. Procédé de fonctionnement selon la revendication 1, **caractérisé en ce que** le commutateur de connexion parallèle (P1+) du premier bloc de cellules de batterie (A1) est amené en position fermée et/ou en position ouverte en fonction d'un état de roulement et/ou d'un état de batterie et/ou d'un état de chargement.

3. Procédé de fonctionnement selon la revendication 1 ou 2, **caractérisé en ce qu'**une mesure de courant et/ou de tension est effectuée à un premier point de connexion (4) de la batterie bitension (1) qui est associé à la première tension (U12) et **en ce que**, dans le deuxième agencement de connexion, le commutateur de connexion parallèle (P1+) est fermé lorsqu'un courant (I_12), fourni à la première tension (U12), est inférieur à un premier courant limite inférieur (I_12_lim_minus) ou lorsque le courant (I_12), fourni à la première tension (U12), est supérieur à un premier courant limite supérieur (I_12_lim_plus) ou lorsque la première tension (U12) est inférieure à une première valeur limite de tension minimale (U12_lim_min) ou lorsqu'un consommateur électrique (9), fonctionnant à la première tension (U12), signale une demande accrue de courant (I_12).

4. Procédé de fonctionnement selon l'une des revendications 1 à 3, **caractérisé en ce que** le courant (I_12) et/ou la tension (U12) sont mesurés au premier point de connexion (4) de la batterie bitension (1) et **en ce que**, dans le deuxième agencement de connexion, le commutateur de connexion parallèle (P1+) est ouvert lorsque le courant (I_12), fourni à la première tension (U12), est supérieur au premier courant limite inférieur (I_12_lim_minus) et inférieur au premier courant limite supérieur (I_12_lim_plus) et lorsque la première tension (U12) est supérieure à la première valeur limite de tension minimale (U12_lim_min) et lorsqu'aucun consommateur électrique (9), fonctionnant à la première tension (U12), ne signale une demande accrue de courant (I_12).

5. Procédé de fonctionnement selon l'une des revendications 1 à 4, **caractérisé en ce qu'**une mesure de courant et/ou de tension est effectuée à un deuxième point de connexion (5) de la batterie bitension (1) qui est associé à la deuxième tension (U48) et **en ce que**, dans le deuxième agencement de connexion, le commutateur de connexion parallèle (P1+) est fermé lorsqu'un courant (I_48), fourni à la deuxième tension (U48), est inférieur à un deuxième courant limite supérieur (I_48_lim_plus) et supérieur à un deuxième courant limite inférieur (I_48_lim_minus) et lorsque la deuxième tension (U48) est inférieure à une deuxième valeur limite de tension maximale (U48_lim_max) et supérieure à une deuxième valeur limite de tension minimale (U48_lim_min) et lorsqu'aucun consommateur électrique (10) fonctionnant à la deuxième tension (U48) ne signale une demande accrue de courant (I_48).

6. Procédé de fonctionnement selon l'une des revendications 1 à 5, **caractérisé en ce que** le courant (I_48) et/ou la tension (U48) sont mesurés au deuxième point de connexion (5) de la batterie bitension (1) et **en ce que**, dans le deuxième agencement de connexion, le commutateur de connexion parallèle (P1+) est ouvert lorsque le courant (I_48), fourni à la deuxième tension (U48), est supérieur au deuxième courant limite supérieur (I_48_lim_plus) ou lorsque le courant (I_48), fourni à la deuxième tension (U48), est inférieur au deuxième courant limite inférieur (I_48_lim_minus) ou lorsque la deuxième tension (U48) est supérieure à la deuxième valeur limite de tension maximale (U48_lim_max) ou lorsque la deuxième tension (U48) est inférieure à la deuxième valeur limite de tension minimale (U48_lim_min) ou lorsqu'un consommateur électrique (10) fonctionnant à la deuxième tension (U48) signale un besoin accru du courant (I_48).

7. Procédé de fonctionnement selon l'une des revendications 1 à 6, **caractérisé en ce que**, dans le deuxième agencement de connexion de la batterie à deux tension (1), le commutateur de connexion parallèle (P1+) est fermé lorsque le véhicule s'arrête ou que la récupération d'énergie est effectuée de manière modérée.

8. Procédé de fonctionnement selon l'une des revendications 1 à 7, **caractérisé en ce que**, lors d'un démarrage à froid du véhicule et/ou lors du stationnement du véhicule, la batterie bitension (1) est placée dans le premier agencement de connexion et le commutateur de connexion parallèle (P1+) est fermé.

9. Procédé de fonctionnement selon l'une des revendications 1 à 8, **caractérisé en ce que**, dans le deuxième agencement de connexion de la batterie bitension (1), le commutateur de connexion parallèle (P1+) est ouvert lorsque le véhicule est fortement accéléré ou qu'une forte récupération d'énergie est effectuée ou que le véhicule est utilisé à l'état de voile active.

10. Procédé de fonctionnement selon l'une des revendications 1 à 9, **caractérisé en ce que** le commutateur de connexion parallèle (P1+) est ouvert dans le deuxième agencement de connexion de la batterie bitension (1) lorsque le véhicule est entraîné par un moteur électrique.

11. Procédé de fonctionnement selon l'une des revendications 1 à 10, **caractérisé en ce que**, dans le premier agencement de connexion de la batterie bitension (1), un état de charge des différents blocs de cellules de batterie (A1, A2, A3, C, D) est équilibré par ouverture et/ou fermeture du commutateur de connexion parallèle (P1+) selon les besoins.
